# EUROPEAN PATENT APPLICATION

(11) **EP 2 581 280 A1**
(43) Date of publication of application: **17.04.2013**
(21) Application number: 10852661.7
(22) Date of filing: 17.09.2010
(51) Int. Cl.: B60T 15/18

(54) **DOUBLE RELAY VALVE INTERGRATED VALVE**

(30) Priority: 09.06.2010 CN 201020220115 U
(71) Applicant: Ruili Group Ruian Auto Parts Co., Ltd, Wenzhou, Zhejiang 325200 (CN)
(72) Inventor: LI, Chuanwu, Wenzhou Zhejiang 325200 (CN); LI, Chuanzhong, Wenzhou Zhejiang 325200 (CN); YANG, Liu, Wenzhou Zhejiang 325200 (CN)
(74) Representative: HOFFMANN EITLE
(86) International application number: PCT/CN2010/001427
(87) International publication number: WO 2011/153668

(57) **Abstract**

The utility model relates to an integrated relay valve used in the air brake service brake pipeline and parking brake pipeline of the vehicle, in particular to an integrated valve with double relay valves, which is integrated by a service relay valve and a parking relay valve or differential relay valve, wherein the integrated valve contains a hand valve interface, a main valve interface, a gas supply and storage tank interface, a piston, valves, a plurality of cavities and other structures; the main valve interface is communicated with a cavity A; the hand valve interface is communicated with a cavity B; the gas supply and storage tank interface is separated from a cavity C through a valve and is also separated from a cavity D through another valve; and the pressure of the air entering the cavities of the valve body is utilized to control the movement of the piston so as to open or close the integrated valve. By adopting the integrated structure of the double relay valves, the intake and exhaust time of the brake chamber can be shortened, the gas flow for controlling the valve can be reduced, the integration level of the vehicle air brake system can be increased, the connections of the pipelines can be reduced, and the safety and reliability of the operation of the brake system can be increased. When the service relay valve is integrated with the differential relay valve, the integrated valve also has the function of preventing double braking.

## Description

### Technical field

The invention relates to an integrated relay valve used in the air brake service brake pipeline and parking brake pipeline of the vehicle, in particular to an integrated valve with double relay valves, which is integrated by a service relay valve and a parking relay valve or differential relay valve.

### Background of the invention

At present, air brake system typically has multiple control valves so that its structure is incompact and there are many connections in the pipelines of the air brake system. Different valves have many different joints and mounting brackets so that the air brake system has complex structure and many mounting elements, and this increases the self weight of the vehicle, inevitablly reducing the work safety and reliability of the system. With regard to the present problems, there are continuously proposed some integrated valves, such as Chinese Utility Model application No. 200820071279.2, named "load sensing valve, relay valve and ASR valve module assembly", which is specially adapted to the brake system of the heavy load vehicle, Chinese Invention application No. 200810211314.0, named "Urgent relay and ABS twin cavity relay integrated valve", which is specially adapted to add urgent relay valve function to the ABS system of the half trailer vehicle, both of which have limitation in its application.

### Summary of the invention

For the purpose, the invention provides an integrated relay valve used in the air brake service brake pipeline and parking brake pipeline of the vehicle, which performs relay function in the brake system. According to the invention, the air intake and discharge time from and into the air braking air chamber may be shortened, thus improving the safety, reducing the air flow of the control valves, and enhancing the reliability of the valves. The number of connection of the pipelines is reduced, therefore the total weight of the brake system is lowered.

For achieving the purpose stated above, the invention provides an integrated relay valve with double relay valves, which is integrated by a service relay valve and a differential relay valve.

Preferably, the integrated relay valve with double relay valves includes a hand valve interface 42, a main valve interface 41 and gas supply and storage tank interfaces 1-1, 1-2, wherein the main valve interface 41 is communicated with a cavity A, and the hand valve interface 42 is communicated with a cavity B.

Preferably, the integrated relay valve with double relay valves further includes pistons 5, 6, 8 and valves 7, 9, wherein the gas supply and storage tank interface 1-1 is separated from a cavity C through the valve 7 and the gas supply and storage tank interface 1-2 is separated from a cavity D through another valve 9, the pistons 5, 6 are provided above the valve 7, the piston 8 is provided above the valve 9.

Preferably, the C cavity is communicated with the back chamber of a spring cylinder, and the D cavity is communicated with the front chamber of the spring cylinder.

An integrated valve with double relay valves may be also integrated by a service relay valve and a parking relay valve.

Preferably, the integrated valve with double relay valves includes a hand valve interface 42, a main valve interface 41 and gas supply and storage tank interfaces 1-1, 1-2, wherein the main valve interface 41 is communicated with a F cavity, and the hand valve interface 42 is communicated with a E cavity.

Preferably, the integrated valve with double relay valves further includes pistons 10, 12 and valves 11, 13, wherein the gas supply and storage tank interface 1-1 is separated from a cavity G through the valve 11 and the gas supply and storage tank interface 1-2 is separated from a cavity H through another valve 13, the piston 10 is provided above the valve 11, the piston 12 is provided above the valve 13.

Preferably, the G cavity is communicated with the back chamber of a spring cylinder, and the H cavity is communicated with the front chamber of the spring cylinder.

An integrated relay valve with double relay valves may be integrated by a service relay valve and a differential relay valve.

Preferably, the integrated valve with double relay valves further includes a hand valve interface 42, a main valve interface 41 and gas supply and storage tank interfaces 1-1, 1-2, wherein the hand valve interface 42 is communicated with a L cavity, and the main valve interface 41 is communicated with a K cavity.

Preferably, the integrated valve with double relay valves further includes pistons 14, 15, 17 and valves 16, 18, wherein the gas supply and storage tank interface 1-1 is separated from a cavity J through the valve 16 and the gas supply and storage tank interface 1-2 is separated from a cavity K through another valve 18, the pistons 14, 15 are provided above the valve 16, the piston 17 is provided above the valve 18.

Preferably, the J cavity is communicated with the back chamber of a spring cylinder, and the K cavity is communicated with the front chamber of the spring cylinder.

The invention has advantages in that the integrated valve with double relay valves according to the invention may perform relay functions in the brake system, so that the air intake and discharge time from and into the air braking air chamber may be shortened, the air flow of the valves (eg. the main valve, the hand valve) is reduced, thus enhancing the safety and the reliability of the valves, and increasing the integration degree of the air braking system of the vehicle. The number of connections of the pipelines is reduced, therefore the total weight of the brake system is lowered, and the reliability of the braking system is enhanced. Further, in addition to the functions stated above, when the service relay valve and the differential relay valve are assembled together, the valve also has the function of avoiding double braking, that is, prevent the service brake system and the parking brake system from operating at the same time, prevent overlapping of the forces in the braking chamber, thereby avoiding overloading of the mechanical transferring members.

### Description of the drawings

Figure 1 is a schematic view of the internal structure of a preferred embodiment of an integrated valve with double relay valves according to the invention.
Figure 2 is a schematic view of the internal structure of another preferred embodiment of an integrated valve with double relay valves according to the invention.
Figure 3 is a schematic view of the internal structure of still another preferred embodiment of an integrated valve with double relay valves according to the invention.

### Description of embodiments

The invention will be described by combined with the drawings. The following description may be only illustrative, and not be construed to be limitation on the scope of the invention.

An integrated relay valve with double relay valves may be integrated by a service relay valve and a parking relay valve or by a service relay valve and a differential relay valve.

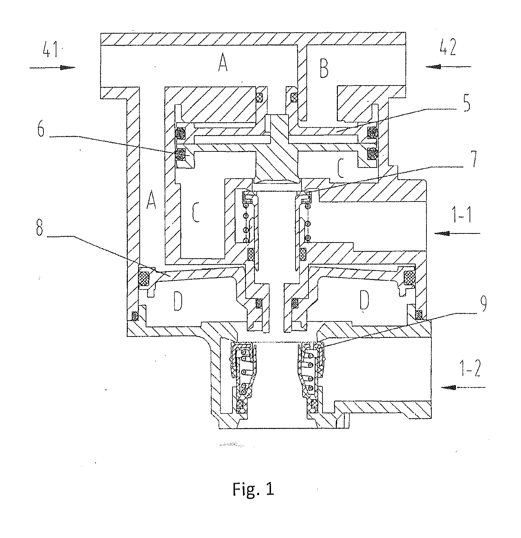

As shown in Fig. 1, an integrated relay valve with double relay valves integrated by a service relay valve and a parking relay valve according to an embodiment may be provided to include a hand valve interface 42, a main valve interface 41 and gas supply and storage tank interfaces 1-1, 1-2, wherein the main valve interface 41 is communicated with a cavity A, and the hand valve interface 42 is communicated with a cavity B.

The integrated relay valve with double relay valves further includes pistons 5, 6, 8 and valves 7, 9, the pistons 5, 6 are provided above the valve 7, and the piston 8 is provided above the valve 9. The gas supply and storage tank interface 1-1 is separated from a cavity C by the valve 7 so that the valve 7 is opened when the compressed air enters into the A cavity or the B cavity to push the piston 5 or piston 6 moved downward, then the gas supply and storage tank interface 1-1 is communicated with the C cavity. The gas supply and storage tank interface 1-2 is separated from a D cavity by a valve 9 so that the valve 9 is opened when the compressed air enters into the A cavity to push the piston 8 moved downward, then the gas supply and storage tank interface 1-2 is communicated with the D cavity. The C cavity is communicated with the back chamber of a spring cylinder, and the D cavity is communicated with the front chamber of the spring cylinder.

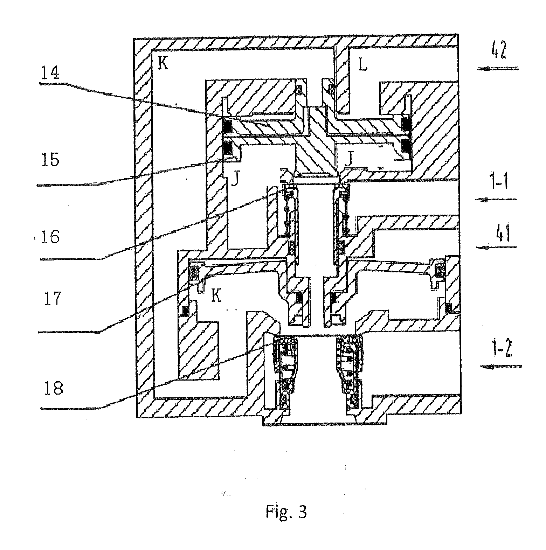

As shown in Fig. 3, an integrated relay valve with double relay valves integrated by a service relay valve and a differential relay valve according to another embodiment may be provided to include a hand valve interface 42, a main valve interface 41 and gas supply and storage tank interfaces 1-1, 1-2, wherein the hand valve interface 42 is communicated with a cavity L, and the main valve interface 41 is communicated with a cavity K.

The integrated valve with double relay valves further includes pistons 14, 15, 17 and valves 16, 18, the pistons 14, 15 are provided above the valve 16, the piston 17 is provided above the valve 18. The gas supply and storage tank interface 1-1 is separated from a cavity J by the valve 16, and the gas supply and storage tank interface 1-2 is separated from a cavity K by the valve 18. The valve 16 is opened when the compressed air enters into the L cavity to push the piston 14 or piston 15 moved downward, then the gas supply and storage tank interface 1-1 is communicated with the J cavity. As the gas supply and storage tank interface 1-2 is separated from a cavity K by the valve 18, the valve 18 is opened when the compressed air enters into the main valve interface 41 to push the piston 17 moved downward, then the gas supply and storage tank interface 1-2 is communicated with the K cavity. The J cavity is communicated with the back chamber of a spring cylinder, and the K cavity is communicated with the front chamber of the spring cylinder.

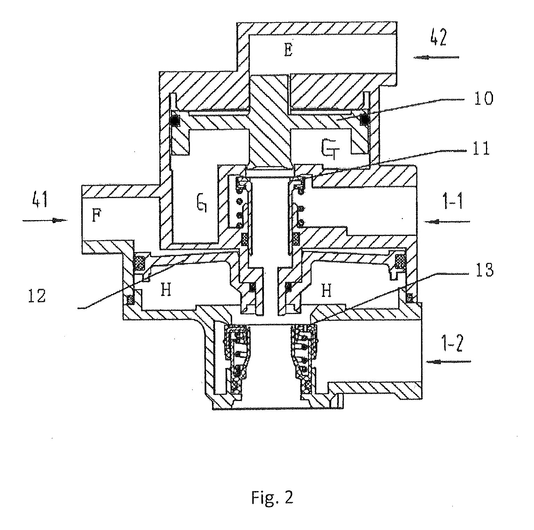

As shown in Fig. 2, the integrated relay valve with double relay valves integrated by a service relay valve and a parking relay valve may include a hand valve interface 42, a main valve interface 41 and gas supply and storage tank interfaces 1-1, 1-2, wherein the main valve interface 41 is communicated with a cavity F, and the hand valve interface 42 is communicated with a cavity E.

The integrated relay valve with double relay valves may further include pistons 10, 12 and valves 11, 13, the piston 10 is provided above the valve 11, and the piston 12 is provided above the valve 13. The gas supply and storage tank interface 1-1 is separated from a cavity G by the valve 11 so that the valve 11 is opened when the compressed air enters into the E cavity to push the piston 10 moved downward, then the gas supply and storage tank interface 1-1 is communicated with the G cavity. The gas supply and storage tank interface 1-2 is separated from a H cavity by a valve 13 so that the valve 13 is opened when the compressed air enters into the F cavity to push the piston 12 moved downward, then the gas supply and storage tank interface 1-2 is communicated with the H cavity. The G cavity is communicated with the back chamber of a spring cylinder, and the H cavity is communicated with the front chamber of the spring cylinder.

The operating principles of the invention are as follows:
1. the operating principles of the integrated valve with the parking relay valve and the differential relay valve in first embodiment
   a. the hand valve interface 42 is connected to a hand valve, the main valve interface 41 is connected to a main valve, the gas supply and storage tank interfaces 1-1, 1-2 are connected to a gas supply and storage tank, the C cavity is communicated with the back chamber of a spring cylinder, and the D cavity is communicated with the front chamber of the spring cylinder.
   b. when parking brake is released, air pressure outputted by the hand valve enters into the valve via the hand valve interface 42, the compressed air moves through the B cavity and pushes the piston 5 to open the valve 7. The compressed air from the gas supply and storage tank interface 1-1 enters into the back chamber of the spring cylinder through the C cavity so that the parking brake is released.
   c. when parking brake is active, air pressure outputted by the main valve enters into the valve via the main valve interface 41, the compressed air moves through the A cavity and pushes the piston 8 to open the valve 9. The compressed air from the gas supply and storage tank interfaces 1-2 enters into the front chamber of the spring cylinder through the D cavity, thereby achieving parking brake.
   d. preventing double brake: when service and parking brake systems both are operating at the same time (that is, parking brake is active, meanwhile parking brake is also preformed), the compressed air from the outlet of the main valve enters into the valve via the main valve interface 41, moves through the A cavity and pushes the piston 5 and piston 5 simultaneously, so that the valve 7 and valve 9 both are opened, the compressed air from the gas supply and storage tank interfaces 1-1 enters into the back chamber of the spring cylinder through the C cavity, the air from the gas supply and storage tank interfaces 1-2 enters into the front chamber of the spring cylinder through D cavity, thereby avoiding double brake.
2. The operating principles of the integrated valve with the service relay valve and the differential relay valve in second embodiment
   a. the hand valve interface 42 is connected to a hand valve, the main valve interface 41 is connected to a main valve, the gas supply and storage tank interfaces 1-1, 1-2 are connected to a gas supply and storage tank, the J cavity is communicated with the back chamber of a spring cylinder, and the K cavity is communicated with the front chamber of the spring cylinder.
   b. when parking brake is released, air pressure outputted by the hand valve enters into the valve via the hand valve interface 42, the compressed air moves through the L cavity and pushes the piston 14 to open the valve 16. The compressed air from the gas supply and storage tank interface 1-1 enters into the back chamber of the spring cylinder through the cavity so that the parking brake is released.
   c. when parking brake is active, air pressure outputted by the main valve enters into the valve via the main valve interface 41, the compressed air pushes the piston 17 to open the valve 18. The compressed air from the gas supply and storage tank interfaces 1-2 enters into the front chamber of the spring cylinder through the K cavity, thereby achieving parking brake.
   d. preventing double brake: when service and parking brake systems both are operating at the same time (that is, parking brake is active, meanwhile parking brake is also preformed), the compressed air from the outlet of the main valve enters into the valve via the main valve interface 41, pushes the piston 17 to open the valve 18, the compressed air from the gas supply and storage tank interfaces 1-2 enters into the front chamber of the spring cylinder through K cavity, while the air pressure of the K cavity pushes the piston 15 to open the valve 16, the compressed air from the gas supply and storage tank interfaces 1-1 enters into the back chamber of the spring cylinder through the J cavity, thereby avoiding double brake.
3. Integrated operating principle of the service relay valve and the parking relay valve
   a. the hand valve interface 42 is connected to a hand valve, the main valve interface 41 is connected to a main valve, the gas supply and storage tank interfaces 1-1, 1-2 are connected to a gas supply and storage tank, the G cavity is communicated with the back chamber of a spring cylinder, and the H cavity is communicated with the front chamber of the spring cylinder.
   b. when parking brake is released, air pressure outputted by the hand valve enters into the valve via the hand valve interface 42, the compressed air moves through the E cavity and pushes the piston 10 to open the valve 11. The compressed air from the gas supply and storage tank interface 1-1 enters into the back chamber of the spring cylinder through the G cavity so that the parking brake is released.
   c. when service brake is active, air pressure outputted by the main valve enters into the valve via the main valve interface 41, the compressed air moves through the F cavity and pushes the piston 12 to open the valve 13. The compressed air from the gas supply and storage tank interface 1-2 enters into the front chamber of the spring cylinder through the H cavity, thereby achieving service brake.

The examples described above may be construed to illustrate the preferred embodiments of the invention, and not to limit the scope of the invention. Many modifications and changes made by the person in the art will fall within the scope defined by the claims of the invention, without departing from the design concept of the invention.

## Claims

1. An integrated valve with double relay valves, wherein the integrated valve includes a service relay valve and a differential relay valve.

2. The integrated valve with double relay valves according to claim 1, **characterized in that** it further includes a hand valve interface (42), a main valve interface (41) and gas supply and storage tank interfaces (1-1, 1-2), wherein the main valve interface is communicated with a cavity A, and the hand valve interface is communicated with a cavity B.

3. The integrated valve with double relay valves according to claim 2, **characterized in that** it further includes pistons (5, 6, 8) and valves (7, 9), wherein the gas supply and storage tank interface (1-1) is separated from a cavity C through the valve (7) and the gas supply and storage tank interface (1-2) is separated from a cavity D through valve (9), the piston (5, 6) is provided above the valve (7), the piston (8) is provided above the valve (9).

4. The integrated valve with double relay valves according to claim 3, **characterized in that** the C cavity is communicated with the back chamber of a spring cylinder, and the D cavity is communicated with the front chamber of the spring cylinder.

5. An integrated valve with double relay valves, wherein the integrated valve includes a service relay valve and a parking relay valve.

6. The integrated valve with double relay valves according to claim 5, **characterized in that** it further includes a hand valve interface (42), a main valve interface (41) and gas supply and storage tank interfaces (1-1, 1-2), wherein the main valve interface (41) is communicated with a F cavity, and the hand valve interface (42) is communicated with a E cavity.

7. The integrated valve with double relay valves according to claim 6, **characterized in that** it further includes pistons (10, 12) and valves (11, 13), wherein the gas supply and storage tank interface (1-1) is separated from a cavity G through the valve (11) and the gas supply and storage tank interface (1-2) is also separated from a cavity H through valve (13), the piston (10) is provided above the valve (11), the piston (12) is provided above the valve (13).

8. The integrated valve with double relay valves according to claim 7, **characterized in that** the G cavity is communicated with the back chamber of a spring cylinder, and the H cavity is communicated with the front chamber of the spring cylinder.

9. The integrated valve with double relay valves according to claim 1, **characterized in that** it further includes a hand valve interface (42), a main valve interface (41) and gas supply and storage tank interfaces (1-1, 1-2), wherein the hand valve interface (42) is communicated with a L cavity, and the main valve interface (41) is communicated with a K cavity.

10. The integrated valve with double relay valves according to claim 9, **characterized in that** it further includes pistons (14, 15, 17) and valves (16, 18), wherein the gas supply and storage tank interface (1-1) is separated from a cavity J through the valve (16) and the gas supply and storage tank interface (1-2) is also separated from a cavity K through valve (18), the piston (14, 15) is provided above the valve (16), the piston (17) is provided above the valve (18).

11. The integrated valve with double relay valves according to claim 9, **characterized in that** the J cavity is communicated with the back chamber of a spring cylinder, and the K cavity is communicated with the front chamber of the spring cylinder.
